# EUROPEAN PATENT SPECIFICATION

(11) **EP 2 858 302 B1**
(45) Date of publication and mention of the grant of the patent: **12.10.2016**
(21) Application number: 13883841.2
(22) Date of filing: 09.08.2013
(51) Int. Cl.: H04L 12/24, H04L 12/26

(54) **CONNECTIVITY CHECK METHOD OF SERVICE STREAM LINK, RELATED APPARATUS AND SYSTEM**
KONNEKTIVITÄTSPRÜFUNGSVERFAHREN EINER DIENSTSTROMVERBINDUNG, ENTSPRECHENDE VORRICHTUNG UND SYSTEM
PROCÉDÉ DE VÉRIFICATION DE CONNECTIVITÉ SUR UNE LIAISON DE FLUX DE SERVICE, APPAREIL CONNEXE, ET SYSTÈME

(43) Date of publication of application: 08.04.2015
(73) Proprietor: Huawei Technologies Co., Ltd., Longgang District Shenzhen, Guangdong 518129 (CN)
(72) Inventor: CHEN, Rui, Shenzhen Guangdong 518129 (CN); LIU, Yi, Shenzhen Guangdong 518129 (CN)
(74) Representative: Pfenning, Meinig & Partner mbB
(86) International application number: PCT/CN2013/081229
(87) International publication number: WO 2015/018090

(56) References cited:
- EP-A1- 2 110 987
- EP-A1- 2 584 734
- WO-A2-2009/080456
- CN-A- 102 291 245
- US-A1- 2005 099 949
- US-A1- 2007 025 256
- BOTTORFF P ET AL: "Scaling provider ethernet", IEEE COMMUNICATIONS MAGAZINE, IEEE SERVICE CENTER, PISCATAWAY, US, vol. 46, no. 9, 1 September 2008 (2008-09-01), pages 104-109, XP011234295, ISSN: 0163-6804, DOI: 10.1109/MCOM.2008.4623714
- EDITOR ET AL: "wd06_editor_y17ethoam_v1 ; wd06_editor_y17ethoam_v1", IEEE DRAFT; WD06_EDITOR_Y17ETHOAM_V1, IEEE-SA, PISCATAWAY, NJ USA, vol. 802.1, no. v1, 2 November 2005 (2005-11-02), pages 1-71, XP017637753, [retrieved on 2005-11-16]

## Description

### TECHNICAL FIELD

The present invention relates to the field of communications technologies, and in particular, to a method, related apparatus and system for checking continuity of a service flow link in a network.

### BACKGROUND

Ethernet technologies have been applied on a large scale within scopes of enterprise networks, metropolitan area networks, and wide area networks due to its characteristics such as simplicity, ease of use, and low cost. However, maintainability and operability of a traditional Ethernet are relatively weak. With the expansion of a popularization scope of the Ethernet, a requirement for operation administration and maintenance (Operation Administration and Maintenance, OAM) functions of the Ethernet is increasingly intense.

The OAM functions of the Ethernet are divided into two major parts: a physical link Ethernet OAM function, which is used to implement fault detection and notification functions for an Ethernet physical link between two devices; and a service Ethernet OAM function, which primarily implements connectivity management of a link between end-to-end (for example, user-to-user, with multiple network devices between the users) devices.

A commonly used protocol for the service Ethernet OAM function is an Institute of Electrical and Electronics Engineers (Institute of Electrical and Electronics Engineers, IEEE) 802.1ag Connectivity Fault Management (Connectivity Fault Management, CFM) protocol, where the protocol is used in a bridge device in a virtual bridging local area network to provide service-level and network-level end-to-end fault detection, fault confirmation and fault locating capabilities. The following describes common concepts of CFM:
Maintenance entity (Maintenance Entity ME): An ME is a maintainable device in a network, and primarily refers to a bridge device in the network, that is, a device capable of performing virtual local area network (Virtual Local Area Network, VLAN) + medium access control (Medium Access Control, MAC) layer-2 forwarding.
Maintenance domain (Maintenance Domain, MD): An MD is used to define a network scope covered by connectivity fault detection. To locate a fault point accurately, a level concept is introduced in the MD. There are 8 levels in total, denoted by integers 0 to 7, where a greater numeral indicates a higher level and a wider scope of the MD. Different MDs may be adjacent or nested, but cannot be crossed. In a case of nesting, only nesting from a higher-level MD to a lower-level MD is allowed, that is, a lower-level MD must be included in a higher-level MD, and one level uniquely corresponds to one MD.
Maintenance association (Maintenance Association, MA): An MA determines a sending scope of a continuity check message (Continuity Check Message, CCM). One or more MAs may be configured in an MD according to a requirement, where a level of an MA is the same as a level of an MD in which the MA is located.
Maintenance point (Maintenance Point, MP): An MP is configured on a device interface, and may be divided into two types: a maintenance end point (Maintenance End Point, MEP) and a maintenance intermediate point (Maintenance Intermediate Point, MIP). The MEP determines a scope and a boundary of the MD and the MA, and is an edge node of the MD and the MA, and belongs to a certain MA. A level of the MEP is equal to a level of an MD in which the MEP is located. The MEP has two directions: an Up direction and a Down direction, where the Up direction is a direction facing a device forwarding layer plane, and the Down direction is a direction far away from the device forwarding layer plane. The MEP needs to be created by a user manually. The MIP is located inside an MA, and multiple MIPs may be deployed between two MEPs to improve network controllability and manageability. The MIP is generated automatically according to a rule and cannot be created manually.

The fault detection function is implemented by means of continuity check (Continuity Check, CC). Each MEP periodically sends a CCM packet in a related service virtual local area network (Service-VLAN, S-VLAN), and the MEP that receives the CCM packet updates a status of a stored peer MEP. If the MEP receives no CCM packet from the peer MEP within a period of time, it is considered that the peer is faulty or a link is faulty, and alarm information is sent.

The fault confirmation function is implemented by means of loopback (Loop Back, LB). A source MEP sends a loopback message (Loopback Message, LBM) packet, the LBM packet is transmitted transparently by the MIP to a destination MEP, and the destination MEP then returns a loopback reply (Loopback Reply, LBR) packet to the source MEP. When an LBR packet that is sent by the destination MEP is not received by the source MEP within setting time, it is confirmed that a link to the destination MEP is faulty.

The fault locating function is implemented by means of LT. The source MEP sends a link trace message (Link Trace Message, LTM), which passes through the MIP and arrives at the destination MEP. All MIPs and destination MEPs along a path of sending the link trace message need to return a link trace reply (Link Trace Reply, LTR) packet to the source MEP. When a link between the source MEP and the destination MEP is faulty, the MIP or destination MEP at one end of the faulty link cannot return the LTR. In this case, the source MEP can determine a location of a fault.

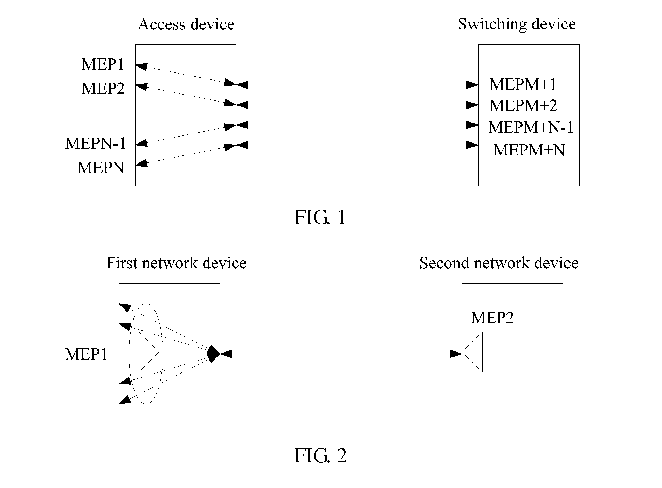

As shown in FIG. 1, currently, a common scenario of an access device is that multiple service flows exist under an S-VLAN. A dotted line in FIG. 1 denotes a service flow, and a link between each service flow and an access device and a switching device is referred to as a service flow link. Currently, each pair of MEPs can be associated with an identifier of only one service flow link. Therefore, if multiple service flow links on the access device need to be monitored simultaneously, multiple pairs of MEPs need to be created. Complexity and difficulty of configuring multiple pairs of MEPs are considerable, which affects wide popularization of CFM application.

EP 2110987 A1 discloses a method in a Maintenance Association Endpoint, MEP, for controlling traffic between a first network element and a second network element (24) connected by a working Traffic Engineering Service Instance, TESI, and a protection TESI. The first network element sets a Traffic field in a Connectivity Check Message, CCM, sent to the second network element. The Traffic field may be set by utilizing a reserved bit within a Flags field of the CCM. The Traffic field indicates which TESI is being utilized to transport the traffic. The second network element takes action to control the traffic based upon a value of the Traffic field in the received CCM. When the Traffic field value in the received CCM does not match the Traffic field value in CCMs sent from the second network element for a predefined period of time, the second network element moves the traffic from its current TESI to the other TESI. WO 2009080456 A1 discloses a network comprising a plurality of nodes interconnected by communication links, wherein the nodes comprise pairs of nodes configured as maintenance end points. Each maintenance end point of each pair is configured to transmit continuity check messages to the other maintenance end point of the pair. Each maintenance end point is arranged to transmit a continuity check message according to a schedule such that an impact of transmission of the continuity check message on the network resources is reduced.

EP 2584734 A1 discloses a method for detecting a mismatch fault and a Maintenance Endpoint (MEP). The method includes: determining whether there is a Traffic Engineering Service Instance (TESI) configured in a segment, setting a Present Traffic in Segment (PTS) variable, and setting a value of a PTS field included in a Connectivity Check Message (CCM) sent from a Maintenance Endpoint (MEP); receiving the CCM by the MEP, when the value of the PTS field included in the CCM does not coincide with that of the PTS variable, setting, by the MEP, a first mismatch fault indication variable mmCCM received to be set; when the first mismatch fault indication variable mmCCM received remains set after a first preset time period expires, detecting that a mismatch fault occurs. The method finds timely the mismatch problem occurred in the segment protection of Provider Backbone Bridging-Traffic Engineering (PBB-TE), thereby preventing data loss and service interruption caused by the occurrence of mismatch.

### SUMMARY

Embodiments of the present invention provide a method, related apparatus and system for checking continuity of a service flow link, so as to solve a problem of affecting wide popularization of CFM application in the prior art because multiple pairs of MEPs need to be created for monitoring multiple service flow links on an access device simultaneously, and complexity and difficulty of configuring multiple pairs of MEPs are considerable.

According to a first aspect, a method for checking continuity of a service flow link in a network is provided, where the network includes a first network device and a second network device, a maintenance end point MEP is set on the first network device, and a correspondence is formed between the MEP and identification information of multiple service flow links; and the method includes:
receiving, by the first network device, multiple continuity check message CCM packets from the second network device, where each CCM packet carries first identification information and second identification information, the first identification information is a set of identification information of the multiple service flow links, and the second identification information is identification information of a service flow link that is used by the second network device for sending the CCM packet; and
comparing a set of the second identification information in the received multiple CCM packets with the first identification information; and if the set of the second identification information in the multiple CCM packets is less than the first identification information, determining that a fault exists on a service flow link corresponding to identification information that exists in the first identification information but does not exist in the set of the second identification information of the multiple CCM packets.

With reference to the first aspect, in a first possible implementation manner, the multiple service flow links are set on the first network device, and before the receiving, by the first network device, multiple CCM packets from the second network device, the method further includes:
sending, by the first network device, the set of the identification information of the multiple service flow links to the second network device.

With reference to the first aspect or the first possible implementation manner of the first aspect, in a second possible implementation manner, the identification information of the service flow link includes a client virtual local area network identifier C-VLAN or a priority.

With reference to the first aspect, in a third possible implementation manner, the first network device receives the multiple CCM packets from the second network device according to a set period.

With reference to the first aspect, in a fourth possible implementation manner, after the determining that a fault exists on a service flow link corresponding to identification information that exists in the first identification information but does not exist in the set of the second identification information of the multiple CCM packets, the method further includes:
if faults exist on all the multiple service flow links, sending fault alarm information in which the identification information is blank;
if a fault exists on at least one service flow link of the multiple service flow links, sending fault alarm information in which the identification
information is identification information of a faulty service flow link.

With reference to the fourth possible implementation manner of the first aspect, in a fifth possible implementation manner, the method further includes:
sending fault recovery information if the first network device receives a CCM packet that is from the second network device and carries identification information of all faulty service flow links as the second identification information.

With reference to the first aspect, the first possible implementation manner of the first aspect, the second possible implementation manner of the first aspect, the third possible implementation manner of the first aspect, the fourth possible implementation manner of the first aspect, or the fifth possible implementation manner of the first aspect, in a sixth possible implementation manner, the method further includes:
sending, by the first network device, a loopback message LBM packet to the second network device, where the LBM packet carries third identification information, and the third identification information is identification information of a service flow link that is used by the first network device for sending the LBM packet; and
if a link loopback reply LBR packet that carries the third identification information and is returned by the second network device is not received by the first network device, determining that a fault exists on a service flow link corresponding to the third identification information.

With reference to the first aspect, the first possible implementation manner of the first aspect, the second possible implementation manner of the first aspect, the third possible implementation manner of the first aspect, the fourth possible implementation manner of the first aspect, the fifth possible implementation manner of the first aspect, or the sixth possible implementation manner of the first aspect, in a seventh possible implementation manner, the method further includes:
sending, by the first network device, a trace message LTM packet to the second network device, where the LTM packet carries fourth identification information, and the fourth identification information is identification information of a service flow link that is used by the first network device for sending the LTM packet; and
if a trace reply LTR packet that carries the fourth identification information and is returned by the second network device is not received by the first network device, determining that a fault exists on a service flow link corresponding to the fourth identification information.

With reference to the first aspect, the first possible implementation manner of the first aspect, the second possible implementation manner of the first aspect, the third possible implementation manner of the first aspect, the fourth possible implementation manner of the first aspect, the fifth possible implementation manner of the first aspect, the sixth possible implementation manner of the first aspect, or the seventh possible implementation manner of the first aspect, in an eighth possible implementation manner, the first network device is an access device, and the second network device is a routing device or a switching device.

With reference to the first aspect, the first possible implementation manner of the first aspect, the second possible implementation manner of the first aspect, the third possible implementation manner of the first aspect, the fourth possible implementation manner of the first aspect, the fifth possible implementation manner of the first aspect, the sixth possible implementation manner of the first aspect, or the seventh possible implementation manner of the first aspect, in a ninth possible implementation manner, the first network device is an access device, the second network device is at least one terminal device, and the multiple service flow links are set on the at least one terminal device.

With reference to the ninth possible implementation manner of the first aspect, in a tenth possible implementation manner, the identification information of the service flow link includes a service virtual local area network S-VLAN to which the service flow link belongs, and further includes the C-VLAN or the priority of the service flow link.

With reference to the ninth possible implementation manner of the first aspect or the tenth possible implementation manner of the first aspect, in an eleventh possible implementation manner, the access device is an optical line terminal, and the terminal device is an optical network unit.

According to a second aspect, an apparatus for checking continuity of a service flow link is provided, where a maintenance end point MEP and multiple service flow links are set on the apparatus, and the apparatus includes:
a storing unit, configured to store a correspondence between the MEP and
identification information of the multiple service flow links;
a transceiver unit, configured to receive multiple continuity check message CCM packets from a network device, where each CCM packet carries first identification information and second identification information, the first identification information is a set of identification information of the multiple service flow links, and the second identification information is identification information of a service flow link that is used by the network device for sending the CCM packet; and
a determining unit, configured to compare a set of the second identification information in the multiple CCM packets with the first identification information, where the multiple CCM packets are received by the transceiver unit; and if the set of the second identification information in the multiple CCM packets is less than the first identification information, determine that a fault exists on a service flow link corresponding to identification information that exists in the first identification information but does not exist in the set of the second identification information of the multiple CCM packets.

With reference to the second aspect, in a first possible implementation manner, the transceiver unit is further configured to: before receiving the multiple CCM packets from the network device, send the set of the identification information of the multiple service flow links to the network device.

With reference to the second aspect or the first possible implementation manner of the second aspect, in a second possible implementation manner, the identification information of the service flow link includes a client virtual local area network identifier C-VLAN or a priority.

With reference to the second aspect, in a third possible implementation manner, the transceiver unit receives the multiple CCM packets from the network device according to a set period.

With reference to the second aspect, in a fourth possible implementation manner, the determining unit is further configured to:
after it is determined that a fault exists on a service flow link corresponding to identification information that exists in the first identification information but does not exist in the set of the second identification information of the multiple CCM packets, if faults exist on all the multiple service flow links, send fault alarm information in which the identification information is blank; if a fault exists on at least one service flow link of the multiple service flow links, send fault alarm information in which the identification information is identification information of a faulty service flow link.

With reference to the fourth possible implementation manner of the second aspect, in a fifth possible implementation manner, the transceiver unit is further configured to:
send fault recovery information if a CCM packet that is from the network device and carries identification information of all faulty service flow links
as the second identification information is received.

With reference to the second aspect, the first possible implementation manner of the second aspect, the second possible implementation manner of the second aspect, the third possible implementation manner of the second aspect, the fourth possible implementation manner of the second aspect, or the fifth possible implementation manner of the second aspect, in a sixth possible implementation manner, the transceiver unit is further configured to send a loopback message LBM packet to the network device, where the LBM packet carries third identification information, and the third identification information is identification information of a service flow link that is used by the transceiver unit for sending the LBM packet; and
the determining unit is further configured to: if a link loopback reply LBR packet that carries the third identification information and is returned by the network device is not received by the transceiver unit, determine that a fault exists on a service flow link corresponding to the third identification information.

With reference to the second aspect, the first possible implementation manner of the second aspect, the second possible implementation manner of the second aspect, the third possible implementation manner of the second aspect, the fourth possible implementation manner of the second aspect, the fifth possible implementation manner of the second aspect, or the sixth possible implementation manner of the second aspect, in a seventh possible implementation manner, the transceiver unit is further configured to send a trace message LTM packet to the network device, where the LTM packet carries fourth identification information, and the fourth identification information is identification information of a service flow link that is used by the first network device for sending the LTM packet; and
the determining unit is further configured to: if a trace reply LTR packet that carries the fourth identification information and is returned by the network device is not received by the transceiver unit, determine that a fault exists on a service flow link corresponding to the fourth identification information.

With reference to the second aspect, the first possible implementation manner of the second aspect, the second possible implementation manner of the second aspect, the third possible implementation manner of the second aspect, the fourth possible implementation manner of the second aspect, the fifth possible implementation manner of the second aspect, the sixth possible implementation manner of the second aspect, or the seventh possible implementation manner of the second aspect, in an eighth possible implementation manner, the network device is a routing device or a switching device.

With reference to the second aspect, the first possible implementation manner of the second aspect, the second possible implementation manner of the second aspect, the third possible implementation manner of the second aspect, the fourth possible implementation manner of the second aspect, the fifth possible implementation manner of the second aspect, the sixth possible implementation manner of the second aspect, or the seventh possible implementation manner of the second aspect, in a ninth possible implementation manner, the network device is at least one terminal device, and the multiple service flow links are set on the at least one terminal device.

With reference to the ninth possible implementation manner of the second aspect, in a tenth possible implementation manner, the identification information of the service flow link includes a service virtual local area network S-VLAN to which the service flow link belongs, and further includes the C-VLAN or the priority of the service flow link.

With reference to the ninth possible implementation manner of the second aspect or the tenth possible implementation manner of the second aspect, in an eleventh possible implementation manner, the terminal device is an optical network unit. According to a third aspect, an access device is provided, where a maintenance end point MEP and multiple service flow links are set on the access device, and the access device includes:
a memory, configured to store a correspondence between the MEP and identification information of the multiple service flow links;
a transceiver, configured to receive multiple continuity check message CCM packets from a network device, where each CCM packet carries first identification information and second identification information, where the first identification information is a set of identification information of the multiple service flow links, and the second identification information is identification information of a service flow link that is used by the network device for sending the CCM packet; and
a processor, configured to compare a set of the second identification information in the multiple CCM packets with the first identification information, where the multiple CCM packets are received by the transceiver unit; and if the second identification information in the multiple CCM packets is less than the first identification information, determine that a fault exists on a service flow link corresponding to identification information that exists in the first identification information but does not exist in the set of the second identification information of the multiple CCM packets.

With reference to the third aspect, in a first possible implementation manner, the transceiver is further configured to:
before receiving the multiple CCM packets from the network device, send the set of the identification information of the multiple service flow links to the network device.

With reference to the third aspect or the first possible implementation manner of the third aspect, in a second possible implementation manner, the identification information of the service flow link includes a client virtual local area network identifier C-VLAN or a priority, or includes a service virtual local area network S-VLAN to which the service flow link belongs and a C-VLAN of the service flow link, or includes a service virtual local area network S-VLAN to which the service flow link belongs and a priority of the service flow link.

With reference to the third aspect, in a third possible implementation manner, the transceiver is configured to receive the multiple CCM packets from the network device according to a set period.

With reference to the third aspect, in a fourth possible implementation manner, the processor is further configured to:
after it is determined that a fault exists on a service flow link corresponding to identification information that exists in the first identification information but does not exist in the set of the second identification information of the multiple CCM packets, if faults exist on all the multiple service flow links, send fault alarm information in which the identification information is blank; if a fault exists on at least one service flow link of the multiple service flow links, send fault alarm information in which the identification information is identification information of a faulty service flow link.

With reference to the fourth possible implementation manner of the third aspect, in a fifth possible implementation manner, the transceiver is further configured to:
send fault recovery information if a CCM packet that is from the network device and carries identification information of all faulty service flow links as the second identification information is received.

With reference to the third aspect, the first possible implementation manner of the third aspect, the second possible implementation manner of the third aspect, the third possible implementation manner of the third aspect, the fourth possible implementation manner of the third aspect, or the fifth possible implementation manner of the third aspect, in a sixth possible implementation manner, the transceiver is further configured to send a loopback message LBM packet to the network device, where the LBM packet carries third identification information, and the third identification information is identification information of a service flow link that is used by the transceiver for sending the LBM packet; and
the processor is further configured to: if a link loopback reply LBR packet that carries the third identification information and is returned by the network device is not received by the transceiver unit, determine that a fault exists on a service flow link corresponding to the third identification information.

With reference to the third aspect, the first possible implementation manner of the third aspect, the second possible implementation manner of the third aspect, the third possible implementation manner of the third aspect, the fourth possible implementation manner of the third aspect, the fifth possible implementation manner of the third aspect, or the sixth possible implementation manner of the third aspect, in a seventh possible implementation manner, the transceiver is further configured to send a trace message LTM packet to the network device, where the LTM packet carries fourth identification information, and the fourth identification information is identification information of a service flow link that is used by the transceiver for sending the LTM packet; and
the processor is further configured to: if a trace reply LTR packet that carries the fourth identification information and is returned by the network device is not received by the transceiver unit, determine that a fault exists on a service flow link corresponding to the fourth identification information.

According to a fourth aspect, a terminal device is provided, where a maintenance end point MEP and multiple service flow links are set on the terminal device, and the terminal device includes:
a memory, configured to store a correspondence between the MEP and
identification information of the multiple service flow links;
a transceiver, configured to receive multiple continuity check message CCM packets from a network device, where each CCM packet carries first identification information and second identification information, where the first identification information is a set of identification information of the multiple service flow links, and the second identification information is identification information of a service flow link that is used by the network device for sending the CCM packet; and
a processor, configured to compare a set of the second identification information in the multiple CCM packets with the first identification information, where the multiple CCM packets are received by the transceiver unit; and if the second identification information in the multiple CCM packets is less than the first identification information, determine that a fault exists on a service flow link corresponding to identification information that exists in the first identification information but does not exist in the set of the second identification information of the multiple CCM packets.

With reference to the fourth aspect, in a first possible implementation manner, the transceiver is further configured to:
before receiving the multiple CCM packets from the network device, send the set of the identification information of the multiple service flow links to the network device.

With reference to the fourth aspect or the first possible implementation manner of the fourth aspect, in a second possible implementation manner, the identification information of the service flow link includes a service virtual local area network S-VLAN to which the service flow link belongs and a client virtual local area network identifier C-VLAN of the service flow link.
the transceiver receives the multiple CCM packets from the network device according to a set period.

With reference to the fourth aspect, in a fourth possible implementation manner, the processor is further configured to:
after it is determined that a fault exists on a service flow link corresponding to identification information that exists in the first identification information but does not exist in the set of the second identification information of the multiple CCM packets, if faults exist on all the multiple service flow links, send fault alarm information in which the identification information is blank; if a fault exists on at least one service flow link of the multiple service flow links, send fault alarm information in which the identification information is identification information of a faulty service flow link.

With reference to the fourth possible implementation manner of the fourth aspect, in a fifth possible implementation manner, the transceiver is further configured to:
send fault recovery information if a CCM packet that is from the network device and carries identification information of all faulty service flow links as the second identification information is received.

With reference to the fourth aspect, the first possible implementation manner of the fourth aspect, the second possible implementation manner of the fourth aspect, the third possible implementation manner of the fourth aspect, the fourth possible implementation manner of the fourth aspect, or the fifth possible implementation manner of the fourth aspect, in a sixth possible implementation manner, the transceiver is further configured to send a loopback message LBM packet to the network device, where the LBM packet carries third identification information, and the third identification information is identification information of a service flow link that is used by the transceiver for sending the LBM packet; and
the processor is further configured to: if a link loopback reply LBR packet that carries the third identification information and is returned by the network device is not received by the transceiver unit, determine that a fault exists on a service flow link corresponding to the third identification information.

With reference to the fourth aspect, the first possible implementation manner of the fourth aspect, the second possible implementation manner of the fourth aspect, the third possible implementation manner of the fourth aspect, the fourth possible implementation manner of the fourth aspect, the fifth possible implementation manner of the fourth aspect, or the sixth possible implementation manner of the fourth aspect, in a seventh possible implementation manner, the transceiver is further configured to send a trace message LTM packet to the network device, where the LTM packet carries fourth identification information, and the fourth identification information is identification information of a service flow link that is used by the transceiver for sending the LTM packet; and
the processor is further configured to: if a trace reply LTR packet that carries the fourth identification information and is returned by the network device is not received by the transceiver, determine that a fault exists on a service flow link corresponding to the fourth identification information.

According to a fifth aspect, a system for checking continuity of a service flow link is provided, including a first network device and a second network device, where the first network device is connected to the second network device, a maintenance end point MEP is set on the first network device, and a correspondence is formed between the MEP and identification information of multiple service flow links; and
the first network device is configured to receive multiple continuity check message CCM packets from the second network device, where each CCM packet carries first identification information and second identification information, where the first identification information is a set of identification information of the multiple service flow links, and the second identification information is identification information of a service flow link that is used by the second network device for sending the CCM packet; and compare a set of the second identification information in the received multiple CCM packets with the first identification information, and if the second identification information in the multiple CCM packets is less than the first identification information, determine that a fault exists on a service flow link corresponding to identification information that exists in the first identification information but does not exist in the set of the second identification information of the multiple CCM packets.

With reference to the fifth aspect, in a first possible implementation manner, the multiple service flow links are set on the first network device, and the first network device is further configured to: before receiving the multiple CCM packets from the second network device, send the set of the identification information of the multiple service flow links to the second network device.

With reference to the fifth aspect or the first possible implementation manner of the fifth aspect, in a second possible implementation manner, the identification information of the service flow link includes a client virtual local area network identifier C-VLAN or a priority.

With reference to the fifth aspect, in a third possible implementation manner, the first network device receives the multiple CCM packets from the second network device according to a set period.

With reference to the fifth aspect, in a fourth possible implementation manner, the first network device is further configured to:
after it is determined that a fault exists on a service flow link corresponding to identification information that exists in the first identification information but does not exist in the set of the second identification information of the multiple CCM packets, if faults exist on all the multiple service flow links, send fault alarm information in which the identification information is blank; if the fault exists on at least one service flow link of the multiple service flow links, send fault alarm information in which the identification information is identification information of a faulty service flow link.

With reference to the fourth possible implementation manner of the fifth aspect, in a fifth possible implementation manner, the first network device is further configured to send fault recovery information if a CCM packet that is from the second network device and carries identification information of all faulty service flow links as the second identification information is received.

With reference to the fifth aspect, the first possible implementation manner of the fifth aspect, the second possible implementation manner of the fifth aspect, the third possible implementation manner of the fifth aspect, the fourth possible implementation manner of the fifth aspect, or the fifth possible implementation manner of the fifth aspect, in a sixth possible implementation manner, the first network device is further configured to:
send a loopback message LBM packet to the second network device, where the LBM packet carries identification information, and the third identification information is identification information of a service flow link that is used by the first network device for sending the LBM packet; and
if a link loopback reply LBR packet that carries the third identification information and is returned by the second network device is not received, determine that a fault exists on a service flow link corresponding to the third identification information.

With reference to the fifth aspect, the first possible implementation manner of the fifth aspect, the second possible implementation manner of the fifth aspect, the third possible implementation manner of the fifth aspect, the fourth possible implementation manner of the fifth aspect, the fifth possible implementation manner of the fifth aspect, or the sixth possible implementation manner of the fifth aspect, in a seventh possible implementation manner, the first network device is further configured to:
send a trace message LTM packet to the second network device, where the LTM packet carries fourth identification information, and the fourth identification information is identification information of a service flow link that is used by the first network device for sending the LTM packet; and
if a trace reply LTR packet that carries the fourth identification information and is returned by the second network device is not received, determine that a fault exists on a service flow link corresponding to the fourth identification information.

With reference to the first aspect, in an eighth possible implementation manner, the multiple service flow links are set on the second network device; and
the first network device is further configured to receive the identification information of the multiple service flow links from the second network device.

With reference to the first aspect or the eighth possible implementation manner of the first aspect, in a ninth possible implementation manner, the identification information of the service flow link includes a service virtual local area network S-VLAN to which the service flow link belongs and a client virtual local area network identifier C-VLAN of the service flow link, or includes the service virtual local area network S-VLAN to which the service flow link belongs and a priority.

According to the method for checking continuity of a service flow link in a network provided in the first aspect, the apparatus for checking continuity of a service flow link provided in the second aspect, the access device provided in the third aspect, the terminal device provided in the fourth aspect, or the system for checking continuity of a service flow link provided in the fifth aspect, one pair of MEPs are used to monitor multiple service flow links, which simplifies complexity and difficulty of configuration and facilitates wide popularization of CFM application.

### BRIEF DESCRIPTION OF DRAWINGS

FIG. 1 is a schematic diagram of monitoring one service flow link by one pair of MEPs in the prior art;
FIG. 2 is a schematic diagram of a first network structure according to an embodiment of the present invention;
FIG. 3 is a schematic diagram of a second network structure according to an embodiment of the present invention;
FIG. 4 is a flowchart of a method for checking continuity of a service flow link in a network according to an embodiment of the present invention;
FIG. 5 is a schematic structural diagram of a CCM packet according to an embodiment of the present invention;
FIG. 6 is a schematic structural diagram of an LB packet according to an embodiment of the present invention;
FIG. 7 is a schematic structural diagram of an apparatus for checking continuity of a service flow link according to an embodiment of the present invention;
FIG. 8 is a schematic structural diagram of an access device according to an embodiment of the present invention;
FIG. 9 is a schematic structural diagram of a terminal device according to an embodiment of the present invention; and
FIG. 10 is a schematic structural diagram of a system for checking continuity of a service flow link according to an embodiment of the present invention.

### DESCRIPTION OF EMBODIMENTS

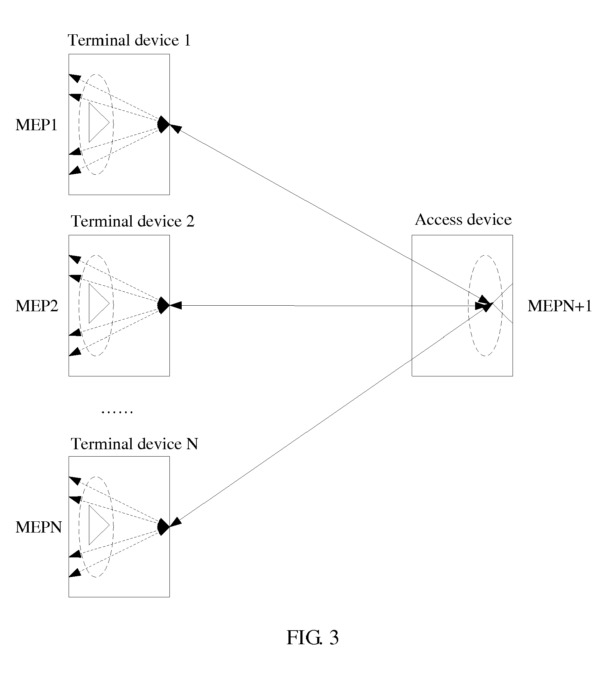

To solve a problem of affecting wide popularization of CFM application in the prior art because multiple pairs of MEPs need to be created for monitoring multiple service flow links on an access device simultaneously, and complexity and difficulty of configuring multiple pairs of MEPs are considerable. An embodiment of the present invention provides a method for checking continuity of a service flow link in a network, where the network includes a first network device and a second network device, a MEP is set on the first network device, a correspondence is formed between the MEP and identification information of multiple service flow links, and the method can be applied to network structures shown in FIG. 2 and FIG. 3.

In the network structure shown in FIG. 2, a MEP 1 and multiple service flow links are set on a first network device, a MEP 2 is set on a second network device, and the MEP 1 and the MEP 2 are configured in pairs. The multiple service flow links may be monitored by using the pair of MEPs, where the MEP 1 is an uplink port in an UP direction, and is equivalent to being configured on each service flow link monitored by the MEP 1 although the MEP 1 is set on the uplink port. Identification information of service flow links monitored by the MEP 1 and the MEP 2 may be a priority, a client virtual local area network (Client-VLAN, C-VLAN), and the like. If identification information of a service flow link is a C-VLAN, the C-VLAN may be continuous or discrete. That identification information of a service flow link is set to all is considered as all C-VLANs under an S-VLAN by default, and configuration of the MEPs does not need to be modified manually even if a service flow under the S-VLAN is added or deleted, and all C-VLANs under the S-VLAN are traversed automatically in a running process of a program, which reduces difficulty of configuring the MEPs on the first network device and the second network device. The first network device may be an access device, and the second network device may be a routing device or a switching device or the like.

In the network structure shown in FIG. 3, the difficulty of configuring MEPs on a first network device and a second network device is further reduced, where multiple service flow links are set on the second network device, one MEP on the first network device corresponds to a MEP on the second network device, and ports on which the MEPs on the first network device and the second network device are located both uplink ports in UP directions. The first network device shown in FIG. 3 is an access device, and the second network device is at least one terminal device. Specifically, the access device may be an optical line terminal, and the terminal device may be an optical network unit. For the terminal device, only one MEP needs to be configured, and a C-VLAN of monitored service flow links needs to be specified. For the access device, still only one MEP needs to be configured, and the MEP on one access device corresponds to MEPs on multiple terminal devices. Identification information of the service flow link includes an S-VLAN to which the service flow link belongs, and further includes the C-VLAN or a priority of the service flow link. Two layers of identifiers may be used to identify one service flow link, where an outer-layer identifier is an S-VLAN set of the terminal device, and an inner-layer identifier is a C-VLAN set or a priority of the terminal device.

For example, if, in the network structure shown in FIG. 3, an MA in which a MEP 1 on a terminal device 1 is located is associated with a VLAN 100, and a C-VLAN set of monitored service flow links is 100 service flow links from VLAN 101 to VLAN 200, then identification information of the service flow links monitored by the MEP 1 on the terminal device 1 is 101-200; if an MA in which a MEP 2 on a terminal device 2 is located is associated with a VLAN 200, and a C-VLAN set of monitored service flow links is VLAN 150 to VLAN 200, then identification information of the service flow links monitored by the MEP 2 on the terminal device 2 is 150-200. An MA in which an MEPN+1 on the access device is located is associated with a VLAN 1000. The VLAN 1000 is an S-VLAN of a service flow of the access device. Further, inner-layer identifiers of service flow links that are set on the terminal device 1, ..., a terminal device N, and the access device may be set to all, which denotes all C-VLANs under a current S-VLAN by default.

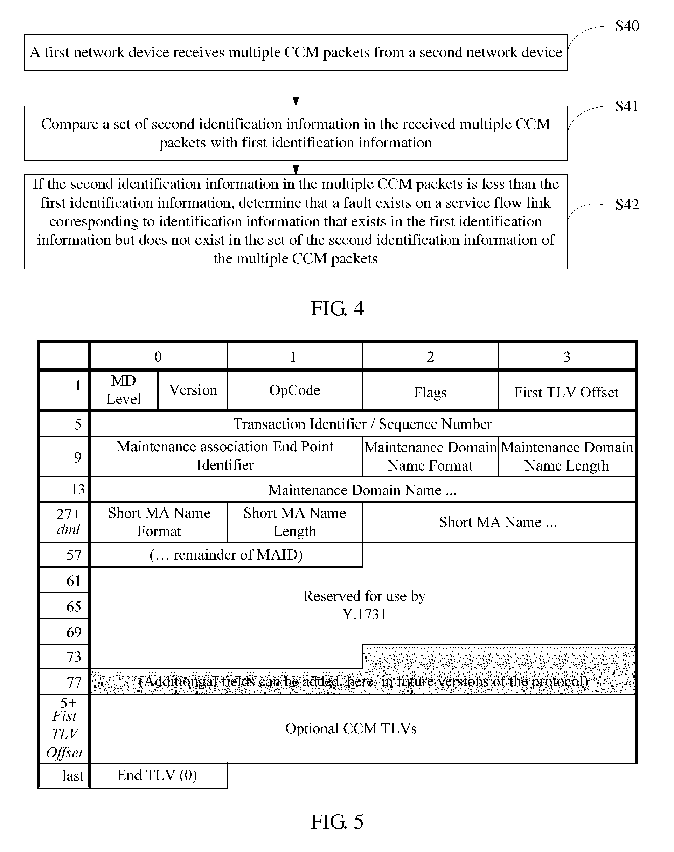

As shown in FIG. 4, implementation steps of a method for checking continuity of a service flow link in a network are as follows:
S40. A first network device receives multiple CCM packets from a second network device.

Each CCM packet carries first identification information and second identification information, where the first identification information is a set of identification information of multiple service flow links, and the second identification information is identification information of a service flow link that is used by the second network device for sending the CCM packet.

S41. Compare a set of the second identification information in the received multiple CCM packets with the first identification information.

S42. If the second identification information in the multiple CCM packets is less than the first identification information, determine that a fault exists on a service flow link corresponding to identification information that exists in the first identification information but does not exist in the set of the second identification information of the multiple CCM packets.

In this embodiment, one pair of MEPs are used to monitor multiple service flow links, which simplifies complexity and difficulty of configuration and facilitates wide popularization of CFM application.

Specifically, in the foregoing method for checking continuity of a service flow link in a network, the multiple service flow links are set on the first network device, and before the first network device receives the multiple CCM packets from the second network device in S40, the method further includes: The first network device sends the set of the identification information of the multiple service flow links to the second network device.

The set of the identification information of the service flow links is sent by the first network device, where the identification information is carried in the CCM packet sent by the second network device.

Specifically, in S40, the first network device receives the multiple CCM packets from the second network device according to a set period. The set period may be set according to actual requirements.

Preferably, after it is determined in S42 that a fault exists on a service flow link corresponding to identification information that exists in the first identification information but does not exist in the set of the second identification information of the multiple CCM packets, the method further includes: if faults exist on all the multiple service flow links, sending fault alarm information in which the identification information is blank; if a fault exists on at least one service flow link of the multiple service flow links, sending fault alarm information in which the identification information is identification information of a faulty service flow link.

A format of a CCM packet is shown in FIG. 5, where a packet header is omitted, and only a packet body structure is provided. Two layers of type length values (Type Length Value, TLV) may be added by using an "Optional CCM TLV" field in the packet, where the Value is in a form of a string, a digital, a bit, or the like. The following uses that the Value is a string as an example for description. A first layer of TLV is used to describe a set of identification information of each service flow link that is set on a local end network device. It is assumed that an S-VLAN is 1000 and C-VLANs are 101 to 104, a string format is "C-VLAN=101 to 104". By using the form of the string, a continuous or discrete set of C-VLANs can be stored flexibly. A second layer of TLV is used to describe identification information of a service flow link that is used by a local end for sending the CCM packet, which is used for a peer network device to parse which CCM packets of service flow links are received and also detects which C-VLANs do not received the packet. By using the forms such as bits and digitals, smaller space may be occupied.

For the network structure shown in FIG. 3, the C-VLAN may be divided into two layers, and a C-VLAN 1 may represent an outer-layer identifier and a C-VLAN 2 may represent an inner-layer identifier.

To avoid that a large number of alarms are generated when a link is faulty, if CCM packets corresponding to all service flow link are not received, only one piece of fault alarm information is sent, where identification information of a faulty service flow link in the fault alarm information is blank. If CCM packets corresponding to a part of service flow links are not received from the second network device, still only one piece of fault alarm information is sent, where an identifier of a faulty service flow link in the fault alarm information is identification information of the service flow links corresponding to the CCM packets that are not received.

Preferably, the foregoing method for checking continuity of a service flow link in a network further includes: sending fault recovery information if the first network device receives a CCM packet that is from the second network device and carries identification information of all faulty service flow links as the second identification information.

If the first network device receives the CCM packet that is sent by the second network device and carries the identification information of all faulty service flow links, the fault recovery information is sent; otherwise, no fault recovery information is sent, which reduces the number of alarms in a user interface and makes the user interface more friendly.

Preferably, the foregoing method for checking continuity of a service flow link in a network further includes: sending, by the first network device, an LBM packet to the second network device, where the LBM packet carries third identification information, and the third identification information is identification information of a service flow link that is used by the first network device for sending the LBM packet; and if an LBR packet that carries the third identification information and is returned by the second network device is not received by the first network device, determining that a fault exists on a service flow link corresponding to the third identification information.

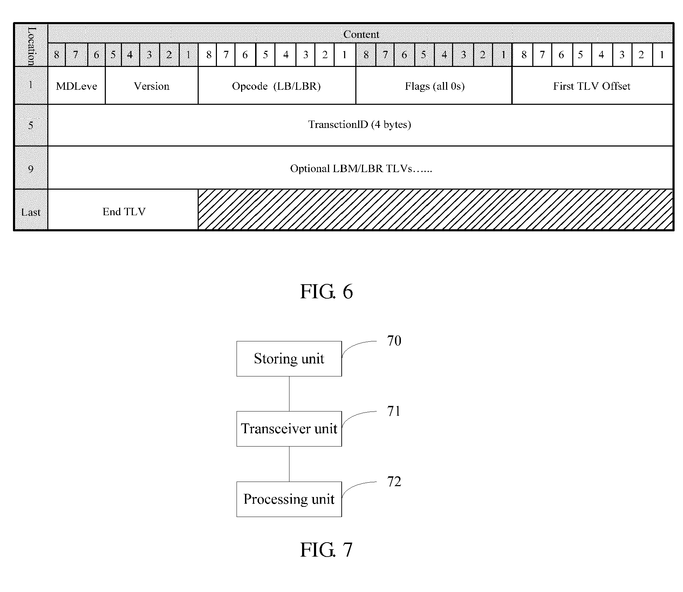

Formats of the LBM packet and the LBR packet excluding a packet header are shown in FIG. 6. Compared with a packet in the prior art in which only a new layer of TLV is added to a TLV field, sending and receiving of an LB packet are required to be different from those in the prior art in the present invention. In the present invention, it is required that when an LB packet is sent, the LB packet may be sent by using all service flow links or by using a single service flow link. Differentiation may be performed by using the third identification information, where the third identification information may be specified according to a requirement and may also be blank definitely. When the third identification information is blank, a service flow link with least identification information may be used by default for sending the LB packet. The Value of the LB packet is in the form of a string, a digital, a bit, or the like. The TLV is used to describe identification information of a service flow link that is used by a local end network device for sending the LBM packet. Specific implementation of the TLV is the same as a TLV format of the CCM packet. After receiving an LBM packet, the second network device parses the TLV format in the LBM packet, and then makes an LBR response to a service flow link that is used for sending the LBM packet. A user may further locate a fault according to whether the second network device responds.

Preferably, the foregoing method for checking continuity of a service flow link in a network further includes: sending, by the first network device, an LTM packet to the second network device, where the LTM packet carries fourth identification information, and the fourth identification information is identification information of a service flow link that is used by the first network device for sending the LTM packet; and if an LTR packet that carries the fourth identification information and is returned by the second network device is not received by the first network device, determining that a fault exists on a service flow link corresponding to the fourth identification information.

When sending an LT packet, the network device may send the LT packet by using all service flow links or by using a single service flow link. Differentiation may be performed by using the fourth identification information, where the fourth identification information may be specified according to a requirement and may also be blank definitely. When the fourth identification information is blank, a service flow link of least identification information may be used by default for sending the LT packet.

Like the LB packet, the LT packet has a new layer of TLV which is added on an existing packet format, where the Value is in the form of a string, a digital, a bit, or the like. The TLV is used to describe identification information of a service flow link that is used by a local network device for sending a LTM packet. Specific implementation is the same as a TLV format of the CCM packet. After receiving an LTM packet, a peer network device parses the TLV format in the LTM packet, and then makes an LTR response to a service flow link that is used for sending the LTM packet. Subsequently, a fault is located according to whether the second network device responds.

Based on the same inventive conception, an embodiment of the present invention provides an apparatus for checking continuity of a service flow link, where a MEP and multiple service flow links are set on the apparatus. A structure of the apparatus is shown in FIG. 7, and includes:
a storing unit 70, configured to store a correspondence between the MEP and identification information of the multiple service flow links;
a transceiver unit 71, configured to receive multiple CCM packets from a network device, where each CCM packet carries first identification information and second identification information, where the first identification information is a set of identification information of the multiple service flow links, and the second identification information is identification information of a service flow link that is used by the network device for sending the CCM packet; and
a determining unit 72, configured to compare a set of the second identification information in the multiple CCM packets with the first identification information, where the multiple CCM packets are received by the transceiver unit 71; and if the second identification information in the multiple CCM packets is less than the first identification information, determine that a fault exists on a service flow link corresponding to identification information that exists in the first identification information but does not exist in the set of the second identification information of the multiple CCM packets.

Preferably, the transceiver unit 71 is further configured to: before receiving the multiple CCM packets from the network device, send the set of the identification information of the multiple service flow links to the network device.

Specifically, the identification information of the service flow link includes a C-VLAN or a priority.

Specifically, the transceiver unit 71 receives the multiple CCM packets from the network device according to a set period.

Preferably, the determining unit 72 is further configured to: after it is determined that a fault exists on a service flow link corresponding to identification information that exists in the first identification information but does not exist in the set of the second identification information of the multiple CCM packets, if faults exist on all the multiple service flow links, send fault alarm information in which the identification information is blank; if a fault exists on at least one service flow link of the multiple service flow links, send fault alarm information in which the identification information is identification information of a faulty service flow link.

Preferably, the transceiver unit 71 is further configured to send fault recovery information if a CCM packet that is from the network device and carries identification information of all faulty service flow links as the second identification information is received.

Preferably, the transceiver unit 71 is further configured to send an LBM packet to the network device, where the LBM packet carries third identification information, and the third identification information is identification information of a service flow link that is used by the transceiver unit 71 for sending the LBM packet.

The determining unit 72 is further configured to: if an LBR packet that carries the third identification information and is returned by the network device is not received by the transceiver unit 71, determine that a fault exists on a service flow link corresponding to the third identification information.

Preferably, the transceiver unit 71 is further configured to send an LTM packet to the network device, where the LTM packet carries fourth identification information, and the fourth identification information is identification information of a service flow link that is used by the first network device for sending the LTM packet.

The determining unit 72 is further configured to: if an LTR packet that carries the fourth identification information and is returned by the network device is not received by the transceiver unit 71, determine that a fault exists on a service flow link corresponding to the fourth identification information.

Specifically, the network device is a routing device or a switching device. Specifically, the network device is at least one terminal device, and the multiple service flow links are set on the at least one terminal device, where the terminal device is an optical network unit.

Preferably, the identification information of the service flow link includes an S-VLAN to which the service flow link belongs, and further includes the C-VLAN or the priority of the service flow link.

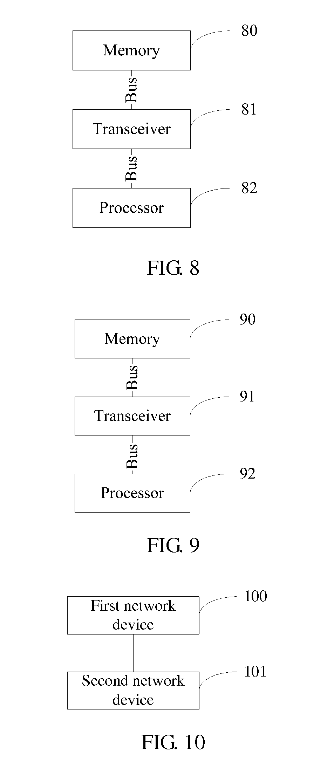

Based on the same inventive conception, an embodiment of the present invention provides an access device, where a MEP and multiple service flow links are set on the access device. A structure of the access device is shown in FIG. 8, and includes:
a memory 80, configured to store a correspondence between the MEP and
identification information of the multiple service flow links; a transceiver 81, configured to receive multiple CCM packets from a network device, where each CCM packet carries first identification information and second identification information, where the first identification information is a set of identification information of the multiple service flow links, and the second identification information is identification information of a service flow link that is used by the network device for sending the CCM packet; and
a processor 82, configured to compare a set of the second identification information in the multiple CCM packets with the first identification information, where the multiple CCM packets are received by the transceiver 81; and if the second identification information in the multiple CCM packets is less than the first identification information, determine that a fault exists on a service flow link corresponding to identification information that exists in the first identification information but does not exist in the set of the second identification information of the multiple CCM packets.

The memory 80 is connected to the transceiver 81 by using a bus, and the transceiver 81 is connected to the processor 82 by using a bus.

Preferably, the transceiver 81 is further configured to: before receiving the multiple CCM packets from the network device, send the set of the identification information of the multiple service flow links to the network device.

Specifically, the identification information of the service flow link includes a C-VLAN or a priority, or includes an S-VLAN to which the service flow link belongs and a C-VLAN of the service flow link, or includes an S-VLAN to which the service flow link belongs and a priority of the service flow link.

Specifically, the transceiver 81 is configured to receive the multiple CCM packets from the network device according to a set period.

Preferably, the processor 82 is further configured to: after it is determined that a fault exists on a service flow link corresponding to identification information that exists in the first identification information but does not exist in the set of the second identification information of the multiple CCM packets, if faults exist on all the multiple service flow links, send fault alarm information in which the identification information is blank; if a fault exists on at least one service flow link of the multiple service flow links, send fault alarm information in which the identification information is identification information of a faulty service flow link.

Preferably, the transceiver 81 is further configured to send fault recovery information if a CCM packet that is from the network device and carries identification information of all faulty service flow links as the second identification information is received. Preferably, the transceiver 81 is further configured to send an LBM packet to the network device, where the LBM packet carries third identification information, and the third identification information is identification information of a service flow link that is used by the transceiver 81 for sending the LBM packet.

The processor 82 is further configured to: if an LBR packet that carries the third identification information and is returned by the network device is not received by the transceiver 81, determine that a fault exists on a service flow link corresponding to the third identification information.

Preferably, the transceiver 81 is further configured to send an LTM packet to the network device, where the LTM packet carries fourth identification information, and the fourth identification information is identification information of a service flow link that is used by the transceiver 81 for sending the LTM packet.

The processor 82 is further configured to: if an LTR packet that carries the fourth identification information and is returned by the network device is not received by the transceiver 81, determine that a fault exists on a service flow link corresponding to the fourth identification information.

Based on the same inventive conception, an embodiment of the present invention provides a terminal device, where a MEP and multiple service flow links are set on the terminal device. A structure of the terminal device is shown in FIG. 9, and includes:
a memory 90, configured to store a correspondence between the MEP and
identification information of the multiple service flow links;
a transceiver 91, configured to receive multiple CCM packets from a network device, where each CCM packet carries first identification information and second identification information, where the first identification information is a set of identification information of the multiple service flow links, and the second identification information is identification information of a service flow link that is used by the network device for sending the CCM packet; and
a processor 92, configured to compare a set of the second identification information in the multiple CCM packets with the first identification information, where the multiple CCM packets are received by the transceiver 91; and if the second identification information in the multiple CCM packets is less than the first identification information, determine that a fault exists on a service flow link corresponding to identification information that exists in the first identification information but does not exist in the set of the second identification information of the multiple CCM packets.

The memory 90 is connected to the transceiver 91 by using a bus, and the transceiver 91 is connected to the processor 92 by using a bus.

Preferably, the transceiver 91 is further configured to: before receiving the multiple CCM packets from the network device, send the set of the identification information of the multiple service flow links to the network device.

Specifically, the identification information of the service flow link includes an S-VLAN to which the service flow link belongs and a C-VLAN of the service flow link.

Specifically, the transceiver 91 receives the multiple CCM packets from the network device according to a set period.

Preferably, the processor 92 is further configured to: after it is determined that a fault exists on a service flow link corresponding to identification information that exists in the first identification information but does not exist in the set of the second identification information of the multiple CCM packets, if faults exist on all the multiple service flow links, send fault alarm information in which the identification information is blank; if a fault exists on at least one service flow link of the multiple service flow links, send fault alarm information in which the identification information is identification information of a faulty service flow link.

Preferably, the transceiver 91 is further configured to send fault recovery information if a CCM packet that is from the network device and carries identification information of all faulty service flow links as the second identification information is received. Preferably, the transceiver 91 is further configured to send an LBM packet to the network device, where the LBM packet carries third identification information, and the third identification information is identification information of a service flow link that is used by the transceiver for sending the LBM packet.

The processor 92 is further configured to: if an LBR packet that carries the third identification information and is returned by the network device is not received by the transceiver 91, determine that a fault exists on a service flow link corresponding to the third identification information.

Preferably, the transceiver 91 is further configured to send an LTM packet to the network device, where the LTM packet carries fourth identification information, and the fourth identification information is identification information of a service flow link that is used by the transceiver for sending the LTM packet.

The processor 92 is further configured to: if an LTR packet that carries the fourth identification information and is returned by the network device is not received by the transceiver 91, determine that a fault exists on a service flow link corresponding to the fourth identification information.

Based on the same invention conception, an embodiment of the present invention provides a system for checking continuity of a service flow link. A structure of the system is shown in FIG. 10, and includes a first network device 100 and a second network device 101, where the first network device 100 is connected to the second network device 101, a MEP is set on the first network device 100, and a correspondence is formed between the MEP and identification information of multiple service flow links.

The first network device 100 is configured to receive multiple CCM packets from the second network device 101, where each CCM packet carries first identification information and second identification information, where the first identification information is a set of identification information of the multiple service flow links, and the second identification information is identification information of a service flow link that is used by the second network device for sending the CCM packet; and compare a set of the second identification information in the received multiple CCM packets with the first identification information, and if the second identification information in the multiple CCM packets is less than the first identification information, determine that a fault exists on a service flow link corresponding to identification information that exists in the first identification information but does not exist in the set of the second identification information of the multiple CCM packets.

Specifically, the multiple service flow links are set on the first network device 100, and the first network device 100 is further configured to: before receiving the multiple CCM packets from the second network device 101, send the set of the identification information of the multiple service flow links to the second network device 101. Specifically, the identification information of the service flow link includes a C-VLAN or a priority.

Specifically, the first network device 100 receives the multiple CCM packets from the second network device 101 according to a set period.

Preferably, the first network device 100 is further configured to: after it is determined that a fault exists on a service flow link corresponding to identification information that exists in the first identification information but does not exist in the set of the second identification information of the multiple CCM packets, if faults exist on all the multiple service flow links, send fault alarm information in which the identification information is blank; if a fault exists on at least one service flow link of the multiple service flow links, send fault alarm information in which the identification information is identification information of a faulty service flow link. Preferably, the first network device 100 is further configured to send fault recovery information if a CCM packet that is from the second network device 101 and carries identification information of all faulty service flow links as the second identification information is received.

Preferably, the first network device 100 is further configured to send an LBM packet to the second network device 101, where the LBM packet carries third identification information, and the third identification information is identification information of a service flow link that is used by the first network device 100 for sending the LBM packet; and if an LBR packet that carries the third identification information and is returned by the second network device 101 is not received, determine that a fault exists on a service flow link corresponding to the third identification information. Preferably, the first network device 100 is further configured to send an LTM packet to the second network device 101, where the LTM packet carries fourth identification information, and the fourth identification information is identification information of a service flow link that is used by the first network device 100 for sending the LTM packet; and if an LTR packet that carries the fourth identification information and is returned by the second network device 101 is not received, determine that a fault exists on a service flow link corresponding to the fourth identification information. Preferably, the multiple service flow links are set on the second network device 101; and the first network device 100 is further configured to receive the identification information of the multiple service flow links from the second network device 101. Specifically, the identification information of the service flow link includes an S-VLAN to which the service flow link belongs and a C-VLAN of the service flow link or includes an S-VLAN to which the service flow link belongs and a priority. Persons skilled in the art should understand that the embodiments of the present invention may be provided as a method, a system, or a computer program product. Therefore, the present invention may adopt a form of a complete hardware embodiment, a complete software embodiment, or an embodiment combing software and hardware. In addition, the present invention may adopt a form of a computer program product implemented in one or more computer available storage media (including but not limited to a disk memory, a CD-ROM, an optical memory, and the like) including computer available program codes.

The present invention is described with reference to flowcharts and/or block diagrams of a method, a device (system), and a computer program product according to the embodiments of the present invention. It should be understood that, computer program instructions may be used to implement each process and/or block in the flowcharts and/or the block diagrams, or a combination of processes and/or blocks in the flowcharts and/or the block diagrams. The computer program instructions may be provided to processors of a universal computer, a dedicated computer, an embedded processor, or other programmable data processing devices to generate a machine, so that the instructions executed by the processors of the computers or other programmable data processing devices generate an apparatus that is configured to implement specified functions in one process or more processes in the flowcharts and/or one or more blocks in the block diagrams.

The computer program instructions may also be stored in a computer-readable memory capable of guiding the computers or other programmable data processing devices to work in a specific manner, so that the instructions stored in the computer-readable memory generate a manufactured product that includes an instructing apparatus, where the instructing apparatus implements the specified functions in one or more processes in the flowcharts and/or one or more blocks in the block diagrams.

The computer program instructions may also be loaded to the computers or other programmable data processing devices, so that a series of operation steps are executed in the computers or other programmable devices to generate processing implemented by the computers, so that instructions executed in the computers or other programmable devices provide steps for implementing the specified functions in one or more processes in the flowcharts and/or one or more blocks in the block diagrams. Although exemplary embodiments of the present invention are described, persons skilled in the art can make other changes and modifications to the embodiments once they learn basic creative concepts. Therefore, the claims attached hereto shall be construed as including exemplary embodiments and all changes and modifications that fall within the scope of the present invention.

## Claims

1. A method for checking continuity of a service flow link in a network, wherein the network comprises a first network device and a second network device, a maintenance end point, MEP, is set on the first network device, and a correspondence is formed between the MEP and identification information of multiple service flow links; **characterized in that** the method comprises:
receiving (S40), by the first network device, multiple continuity check message, CCM, packets from the second network device, wherein each CCM packet carries first identification information and second identification information, the first identification information is a set of identification information of the multiple service flow links, and the second identification information is identification information of a service flow link that is used by the second network device for sending the CCM packet; and
comparing (S41) a set of the second identification information in the received multiple CCM packets with the first identification information; and if the set of the second identification information in the multiple CCM packets is less than the first identification information, determining (S42) that a fault exists on a service flow link corresponding to identification information that exists in the first identification information but does not exist in the set of the second identification information of the multiple CCM packets.

2. The method according to claim 1, wherein the multiple service flow links are set on the first network device, and before the receiving (S40), by the first network device, multiple CCM packets from the second network device, the method further comprises:
sending, by the first network device, the set of the identification information of the multiple service flow links to the second network device.

3. The method according to claim 1 or 2, wherein the identification information of the service flow link comprises a client virtual local area network identifier C-VLAN or a priority.

4. The method according to claim 1, wherein the first network device receives the multiple CCM packets from the second network device according to a set period.

5. The method according to any one of claims 1 to 4, further comprising:
sending, by the first network device, a loopback message LBM packet to the second network device, wherein the LBM packet carries third identification information, and the third identification information is identification information of a service flow link that is used by the first network device for sending the LBM packet; and
if a link loopback reply LBR packet that carries the third identification information and is returned by the second network device is not received by the first network device, determining that a fault exists on a service flow link corresponding to the third identification information.

6. The method according to claims 1 to 5, further comprising:
sending, by the first network device, a trace message LTM packet to the second network device, wherein the LTM packet carries fourth identification information, and the fourth identification information is identification information of a service flow link that is used by the first network device for sending the LTM packet; and
if a trace reply LTR packet that carries the fourth identification information and is returned by the second network device is not received by the first network device, determining that a fault exists on a service flow link corresponding to the fourth identification information.

7. The method according to any one of claims 1 to 6, wherein the first network device is an access device, and the second network device is a routing device or a switching device.

8. The method according to any one of claims 1 to 6, wherein the first network device is an access device, the second network device is at least one terminal device, and the multiple service flow links are set on the at least one terminal device.

9. The method according to claim 8, wherein the identification information of the service flow link comprises a service virtual local area network S-VLAN to which the service flow link belongs, and further comprises the C-VLAN or the priority of the service flow link.

10. An apparatus for checking continuity of a service flow link, wherein a maintenance end point MEP and multiple service flow links are set on the apparatus, **characterized in that** the apparatus comprises:
a storing unit (70), configured to store a correspondence between the MEP and identification information of the multiple service flow links;
a transceiver unit (71), configured to receive multiple continuity check message CCM packets from a network device, wherein each CCM packet carries first identification information and second identification information, the first identification information is a set of identification information of the multiple service flow links, and the second identification information is identification information of a service flow link that is used by the network device for sending the CCM packet; and
a determining unit (72), configured to compare a set of the second identification information in the multiple CCM packets with the first identification information, wherein the multiple CCM packets are received by the transceiver unit; and if the set of the second identification information in the multiple CCM packets is less than the first identification information, determine that a fault exists on a service flow link corresponding to identification information that exists in the first identification information but does not exist in the set of the second identification information of the multiple CCM packets.

11. The apparatus according to claim 10, wherein the transceiver unit (71) is further configured to: before receiving the multiple CCM packets from the network device, send the set of the identification information of the multiple service flow links to the network device.

12. The apparatus according to claim 10 or 11, wherein the identification information of the service flow link comprises a client virtual local area network identifier C-VLAN or a priority.

13. A system for checking continuity of a service flow link, comprising a first network device (100) and a second network device (101), wherein the first network device (100) is an apparatus according to any one of the claims 10-12, and is connected to the second network device (101), a maintenance end point MEP is set on the first network device (100), and a correspondence is formed between the MEP and identification information of multiple service flow links.

14. The system according to claim 13, wherein the identification information of the service flow link comprises a client virtual local area network identifier C-VLAN or a priority.

## Patentansprüche

1. Verfahren zum Überprüfen der Kontinuität einer Dienstflussverbindungsstrecke in einem Netz, wobei das Netz eine erste Netzvorrichtung und eine zweite Netzvorrichtung umfasst, ein Wartungsendpunkt, MEP, auf der ersten Netzvorrichtung eingestellt ist, und eine Zuordnungsbeziehung zwischen dem MEP und Identifizierungsinformationen von mehreren Dienstflussverbindungsstrecken gebildet ist; **dadurch gekennzeichnet, dass** das Verfahren Folgendes umfasst:
Empfangen (S40) durch die erste Netzvorrichtung von mehreren Kontinuitätsüberprüfungsnachricht-Paketen, CCM-Paketen, von der zweiten Netzvorrichtung, wobei jedes CCM-Paket erste Identifizierungsinformationen und zweite Identifizierungsinformationen führt, die ersten Identifizierungsinformationen eine Gruppe von Identifizierungsinformationen der mehreren Dienstflussverbindungsstrecken sind und die zweiten Identifizierungsinformationen Identifizierungsinformationen einer Dienstflussverbindungsstrecke sind, die durch die zweite Netzvorrichtung zum Senden des CCM-Pakets verwendet wird; und
Vergleichen (S41) einer Gruppe der zweiten Identifizierungsinformationen in den empfangenen mehreren CCM-Paketen mit den ersten Identifizierungsinformationen; und falls die Gruppe der zweiten Identifizierungsinformationen in den mehreren CCM-Paketen kleiner ist als die ersten Identifizierungsinformationen, Bestimmen (S42), dass ein Fehler auf einer Dienstflussverbindungsstrecke existiert, die Identifizierungsinformationen entspricht, die in den ersten Identifizierungsinformationen existieren, jedoch nicht in der Gruppe der zweiten Identifizierungsinformationen der mehreren CCM-Pakete existieren.

2. Verfahren nach Anspruch 1, wobei die mehreren Dienstflussverbindungsstrecken auf der ersten Netzvorrichtung eingestellt sind und das Verfahren vor dem Empfangen (S40) durch die erste Netzvorrichtung von mehreren CCM-Paketen von der zweiten Netzvorrichtung ferner Folgendes umfasst:
Senden durch die erste Netzvorrichtung der Gruppe der Identifizierungsinformationen der mehreren Dienstflussverbindungsstrecken zu der zweiten Netzvorrichtung.

3. Verfahren nach Anspruch 1 oder 2, wobei die Identifizierungsinformationen der Dienstflussverbindungsstrecke eine Client-Kennung eines virtuellen lokalen Netzes, C-VLAN, oder eine Priorität umfassen.

4. Verfahren nach Anspruch 1, wobei die erste Netzvorrichtung die mehreren CCM-Pakete von der zweiten Netzvorrichtung gemäß einem voreingestellten Zeitintervall empfängt.

5. Verfahren nach einem der Ansprüche 1 bis 4, das ferner Folgendes umfasst:
Senden durch die erste Netzvorrichtung eines Schleifenschaltungsnachricht-Pakets, LBM-Pakets, zu der zweiten Netzvorrichtung, wobei das LBM-Paket dritte Identifizierungsinformationen führt und die dritten Identifizierungsinformationen Identifizierungsinformationen einer Dienstflussverbindungsstrecke sind, die durch die erste Netzvorrichtung zum Senden des LBM-Pakets verwendet wird; und
falls ein Verbindungsstrecken-Schleifenschaltungsantwort-Paket, Verbindungsstrecken-LBR-Paket, das die dritten Identifizierungsinformationen führt und durch die zweite Netzvorrichtung zurückgegeben wird, nicht durch die erste Netzvorrichtung empfangen wird, Bestimmen, dass ein Fehler auf einer Dienstflussverbindungsstrecke, die den dritten Identifizierungsinformationen entspricht, existiert.

6. Verfahren nach den Ansprüchen 1 bis 5, das ferner Folgendes umfasst:
Senden durch die erste Netzvorrichtung eines Verfolgungsnachricht-Pakets, LTM-Pakets, zu der zweiten Netzvorrichtung, wobei das LTM-Paket vierte Identifizierungsinformationen führt und die vierten Identifizierungsinformationen Identifizierungsinformationen einer Dienstflussverbindungsstrecke sind, die durch die erste Netzvorrichtung zum Senden des LTM-Pakets verwendet wird; und
falls ein Verfolgungsantwort-Paket, LTR-Paket, das die vierten Identifizierungsinformationen führt und durch die zweite Netzvorrichtung zurückgegeben wird, nicht durch die erste Netzvorrichtung empfangen wird, Bestimmen, dass ein Fehler auf einer Dienstflussverbindungsstrecke, die den vierten Identifizierungsinformationen entspricht, existiert.

7. Verfahren nach einem der Ansprüche 1 bis 6, wobei die erste Netzvorrichtung eine Zugangsvorrichtung ist und die zweite Netzvorrichtung eine Lenkungsvorrichtung oder eine Vermittlungsvorrichtung ist.

8. Verfahren nach einem der Ansprüche 1 bis 6, wobei die erste Netzvorrichtung eine Zugangsvorrichtung ist, die zweite Netzvorrichtung wenigstens eine Endgerätevorrichtung ist und die mehreren Dienstflussverbindungsstrecken auf der wenigstens einen Endgerätevorrichtung eingestellt sind.

9. Verfahren nach Anspruch 8, wobei die Identifizierungsinformationen der Dienstflussverbindungsstrecke ein virtuelles lokales Dienst-Netz, S-VLAN, umfassen, zu dem die Dienstflussverbindungsstrecke gehört, und ferner die C-VLAN oder die Priorität der Dienstflussverbindungsstrecke umfassen.

10. Vorrichtung zum Überprüfen der Kontinuität einer Dienstflussverbindungsstrecke, wobei ein Wartungsendpunkt, MEP, und mehrere Dienstflussverbindungsstrecken auf der Vorrichtung eingestellt sind, **dadurch gekennzeichnet, dass** die Vorrichtung Folgendes umfasst:
eine Speichereinheit (70), die konfiguriert ist, eine Zuordnungsbeziehung zwischen dem MEP und Identifizierungsinformationen der mehreren Dienstflussverbindungsstrecken zu speichern;
eine Sender/Empfängereinheit (71), die konfiguriert ist, mehrere Kontinuitätsüberprüfungsnachricht-Pakete, CCM-Pakete, von einer Netzvorrichtung zu empfangen, wobei jedes CCM-Paket erste Identifizierungsinformationen und zweite Identifizierungsinformationen führt, die ersten Identifizierungsinformationen eine Gruppe von Identifizierungsinformationen der mehreren Dienstflussverbindungsstrecken sind und die zweiten Identifizierungsinformationen Identifizierungsinformationen einer Dienstflussverbindungsstrecke sind, die durch die Netzvorrichtung zum Senden des CCM-Pakets verwendet wird; und
eine Bestimmungseinheit (72), die konfiguriert ist, eine Gruppe der zweiten Identifizierungsinformationen in den mehreren CCM-Paketen mit den ersten Identifizierungsinformationen zu vergleichen, wobei die mehreren CCM-Pakete durch die Sender/Empfängereinheit empfangen werden; und falls die Gruppe der zweiten Identifizierungsinformationen in den mehreren CCM-Paketen kleiner ist als die ersten Identifizierungsinformationen, zu bestimmen, dass ein Fehler auf einer Dienstflussverbindungsstrecke existiert, die Identifizierungsinformationen entspricht, die in den ersten Identifizierungsinformationen existieren, jedoch nicht in der Gruppe der zweiten Identifizierungsinformationen der mehreren CCM-Pakete existiert.

11. Vorrichtung nach Anspruch 10, wobei die Sender/Empfängereinheit (71) ferner konfiguriert ist: vor dem Empfangen der mehreren CCM-Pakete von der Netzvorrichtung die Gruppe von Identifizierungsinformationen der mehreren Dienstflussverbindungsstrecken zu der Netzvorrichtung zu senden.

12. Vorrichtung nach Anspruch 10 oder 11, wobei die Identifizierungsinformationen der Dienstflussverbindungsstrecke eine Client-Kennung eines virtuellen lokalen Netzes, C-VLAN, oder eine Priorität umfassen.

13. System zum Überprüfen der Kontinuität einer Dienstflussverbindungsstrecke, das eine erste Netzvorrichtung (100) und eine zweite Netzvorrichtung (101) umfasst, wobei die erste Netzvorrichtung (100) eine Vorrichtung nach einem der Ansprüche 10-12 ist und mit der zweiten Netzvorrichtung (101) verbunden ist, ein Wartungsendpunkt, MEP, auf der ersten Netzvorrichtung (100) eingestellt ist und eine Zuordnungsbeziehung zwischen dem MEP und Identifizierungsinformationen von mehreren Dienstflussverbindungsstrecken gebildet ist.

14. System nach Anspruch 13, wobei die Identifizierungsinformationen der Dienstflussverbindungsstrecke eine Client-Kennung eines virtuellen lokalen Netzes, C-VLAN, oder eine Priorität umfassen.

## Revendications

1. Procédé permettant de vérifier une continuité d'une liaison de flux de service dans un réseau, dans lequel le réseau comprend un premier dispositif réseau et un deuxième dispositif réseau, un point d'extrémité de maintenance, MEP, étant créé sur le premier dispositif réseau, et une correspondance étant formée entre le MEP et des informations d'identification de multiples liaisons de flux de service ; **caractérisé en ce qu'**il comprend les étapes suivantes :
recevoir (S40), par le premier dispositif réseau, de multiples paquets de messages de vérification de continuité, CCM, à partir du deuxième dispositif réseau, chaque paquet CCM contenant des premières informations d'identification et des deuxièmes informations d'identification, les premières informations d'identification étant un ensemble d'informations d'identification des multiples liaisons de flux de service, et les deuxièmes informations d'identification étant des informations d'identification d'une liaison de flux de service qui est utilisée par le deuxième dispositif réseau pour envoyer le paquet CCM ; et
comparer (S41) un ensemble des deuxièmes informations d'identification dans les multiples paquets CCM reçus avec les premières informations d'identification ; et si l'ensemble des deuxièmes informations d'identification dans les multiples paquets CCM est inférieur aux premières informations d'identification, déterminer (S42) qu'une anomalie existe sur une liaison de flux de service correspondant aux informations d'identification qui existent dans les premières informations d'identification mais qui n'existent pas dans l'ensemble des deuxièmes informations d'identification des multiples paquets CCM.

2. Procédé selon la revendication 1, dans lequel les multiples liaisons de flux de service sont créées sur le premier dispositif réseau, et avant l'étape consistant à recevoir (S40), par le premier dispositif réseau, plusieurs paquets CCM à partir du deuxième dispositif réseau, le procédé comprend en outre :
envoyer, par le premier dispositif réseau, l'ensemble des informations d'identification des multiples liaisons de flux de service au deuxième dispositif réseau.

3. Procédé selon la revendication 1 ou 2, dans lequel les informations d'identification de la liaison de flux de service comprennent un identifiant de réseau local virtuel client C-VLAN ou une priorité.

4. Procédé selon la revendication 1, dans lequel le premier dispositif réseau reçoit les multiples paquets CCM à partir du deuxième dispositif réseau selon une période définie.

5. Procédé selon l'une quelconque des revendications 1 à 4, comprenant en outre l'étape suivante :
envoyer, par le premier dispositif réseau, un paquet de message de retour de boucle LBM au deuxième dispositif réseau, le paquet LBM contenant des troisièmes informations d'identification, et les troisièmes informations d'identification étant des informations d'identification d'une liaison de flux de service qui est utilisée par le premier dispositif réseau pour envoyer le paquet LBM ; et
si un paquet de réponse de retour de boucle de liaison LBR qui contient les troisièmes informations d'identification et qui est retourné par le deuxième dispositif réseau n'est pas reçu par le premier dispositif réseau, déterminer qu'une anomalie existe sur une liaison de flux de service correspondant aux troisièmes informations d'identification.

6. Procédé selon les revendications 1 à 5, comprenant en outre les étapes suivantes :
envoyer, par le premier dispositif réseau, un paquet de message de trace LTM au deuxième dispositif réseau, le paquet LTM contenant des quatrièmes informations d'identification, et les quatrièmes informations d'identification étant des informations d'identification d'une liaison de flux de service qui est utilisée par le premier dispositif réseau pour envoyer le paquet LTM ; et
si un paquet de réponse de trace LTR qui contient les quatrièmes informations d'identification et qui est retourné par le deuxième dispositif réseau n'est pas reçu par le premier dispositif réseau, déterminer qu'une anomalie existe sur une liaison de flux de service correspondant aux quatrièmes informations d'identification.

7. Procédé selon l'une quelconque des revendications 1 à 6, dans lequel le premier dispositif réseau est un dispositif d'accès, et le deuxième dispositif réseau est un dispositif de routage ou un dispositif de commutation.

8. Procédé selon l'une quelconque des revendications 1 à 6, dans lequel le premier dispositif réseau est un dispositif d'accès, le deuxième dispositif réseau est au moins un dispositif terminal, et les multiples liaisons de flux de service sont créées sur ledit dispositif terminal.

9. Procédé selon la revendication 8, dans lequel les informations d'identification de la liaison de flux de service comprennent un réseau local virtuel de service S-VLAN auquel la liaison de flux de service appartient, et comprennent en outre le C-VLAN ou la priorité de la liaison de flux de service.

10. Appareil permettant de vérifier une continuité d'une liaison de flux de service, dans lequel un point d'extrémité de maintenance MEP et de multiples liaisons de flux de service sont créés sur l'appareil, **caractérisé en ce qu'**il comprend :
une unité de stockage (70), configurée pour stocker une correspondance entre le MEP et des informations d'identification des multiples liaisons de flux de service ;
une unité d'émetteur-récepteur (71), configurée pour recevoir de multiples paquets CCM de messages de vérification de continuité à partir d'un dispositif réseau, chaque paquet CCM contenant des premières informations d'identification et des deuxièmes informations d'identification, les premières informations d'identification étant un ensemble d'informations d'identification des multiples liaisons de flux de service, et les deuxièmes informations d'identification étant des informations d'identification d'une liaison de flux de service qui est utilisée par le dispositif réseau pour envoyer le paquet CCM ; et
une unité de détermination (72), configurée pour comparer un ensemble des deuxièmes informations d'identification dans les multiples paquets CCM avec les premières informations d'identification, les multiples paquets CCM étant reçus par l'unité d'émetteur-récepteur ; et si l'ensemble des deuxièmes informations d'identification dans les multiples paquets CCM est inférieur aux premières informations d'identification, déterminer qu'une anomalie existe sur une liaison de flux de service correspondant aux informations d'identification qui existent dans les premières informations d'identification mais qui n'existent pas dans l'ensemble des deuxièmes informations d'identification des multiples paquets CCM.

11. Appareil selon la revendication 10, dans lequel l'unité d'émetteur-récepteur (71) est en outre configurée pour : avant de recevoir les multiples paquets CCM à partir du dispositif réseau, envoyer l'ensemble des informations d'identification des multiples liaisons de flux de service au dispositif réseau.

12. Appareil selon la revendication 10 ou 11, dans lequel les informations d'identification de la liaison de flux de service comprennent un identifiant de réseau local virtuel client C-VLAN ou une priorité.

13. Système permettant de vérifier une continuité d'une liaison de flux de service, comprenant un premier dispositif réseau (100) et un deuxième dispositif réseau (101), le premier dispositif réseau (100) étant un appareil selon l'une quelconque des revendications 10 à 12, et étant connecté au deuxième dispositif réseau (101), un point d'extrémité de maintenance MEP étant créé sur le premier dispositif réseau (100), et une correspondance étant formée entre le MEP et des informations d'identification des multiples liaisons de flux de service.

14. Système selon la revendication 13, dans lequel les informations d'identification de la liaison de flux de service comprennent un identifiant de réseau local virtuel client C-VLAN ou une priorité.
